# EUROPEAN PATENT SPECIFICATION

(11) **EP 1 771 018 B1**
(45) Date of publication and mention of the grant of the patent: **23.05.2012**
(21) Application number: 06722275.2
(22) Date of filing: 07.04.2006
(51) Int. Cl.: H04W 4/06

(54) **A METHOD FOR ASSIGNING A DEDICATED UPLINK FOR A USER IN A TRUNKING GROUP**
VERFAHREN ZUM ZUWEISEN EINER ZUGEWIESENEN AUFWÄRTSVERBINDUNG FÜR EINEN NUTZER IN EINER BÜNDELGRUPPE
PROCEDE POUR AFFECTER UNE LIAISON MONTANTE DEDIEE A UN UTILISATEUR DANS UN GROUPE DE MISE EN COMMUN

(30) Priority: 19.04.2005 CN 200510064677
(43) Date of publication of application: 04.04.2007
(73) Proprietor: Huawei Technologies Co., Ltd., Longgang District, Shenzhen Guangdong 518129 (CN)
(72) Inventor: CHEN, De, Huawei Administration Building, Guangdong 518129 (CN); LIU, Guang, Huawei Administration Building, Guangdong 518129 (CN)
(74) Representative: Körber, Martin Hans
(86) International application number: PCT/CN2006/000623
(87) International publication number: WO 2006/111069

(56) References cited:
- WO-A1-02/093953
- WO-A2-97/48248
- WO-A2-03/005756
- US-A- 5 864 762
- US-A1- 2002 102 999

## Description

### Field of the Invention

The present invention relates to a technique of pre-emption of a channel uplink in a trunking wireless communication system, and particularly, to a method for assigning a dedicated channel uplink to a service subscriber of a trunking group.

### Background of the Invention

A trunking wireless communication system, hereinafter referred to as trunking system, is an economical and flexible dispatching communication system, which has been developing in recent years and is widely employed in government agencies, fields of energy and transportation, airports, docks, plants, mines, fire protection agencies, police stations, irrigation works and military units to meet the demands of internal communication thereof.

The basic service provided by the trunking system is a Voice Group Call Service (VGCS). The VGCS allows a service subscriber to establish a call to multiple other service subscribers which belong to one given service area and have a same Group Identity (ID) in a trunking group. The given service area consists of multiple cells under one Mobile Switching Center (MSC) or multiple MSCs, and the multiple MSCs may be managed by an anchor MSC. The VGCS is a kind of half-duplex communication, i.e., every service subscriber may be a talker during an ongoing group call, but only one service subscriber is allowed to talk at a time while other members in the trunking group are listeners.

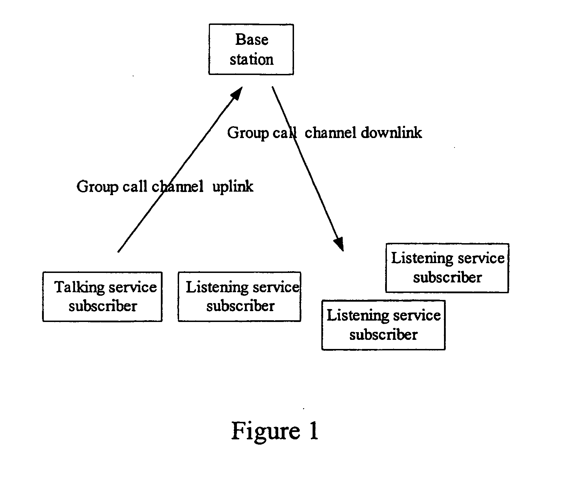

Figure 1 is a schematic diagram illustrating a group call procedure in the prior art. Supposing all the service subscribers in a trunking group are in areas managed by one base station, a pair of uplink and downlink group call channels is allocated to the service subscribers of the trunking group during establishment of a group call. One service subscriber talks as a current talker on a group call channel uplink (uplink for short) in a group transmit mode, and other service subscribers listen to the current talker as listeners on a group call channel downlink (downlink for short) in a group receive mode. Notifications about group channel configuration are broadcast on a Notification Channel (NCH).

Service subscribers of a trunking system may belong to different trunking groups, and the different groups have different priority levels. Meanwhile, different priority levels are also defined for different service subscribers in one trunking group so that the service subscribers may enjoy different service features as described below.
1. Parameters in a random access procedure are different for service subscribers with different priority levels in a trunking group, e.g., different retransmission numbers of times and retransmission intervals, which may result in different success ratios of an access;
2. When multiple service subscribers with different priority levels in a trunking group send uplink access requests at the same time, the trunking system checks their priority levels, and allocates the uplink to the service subscriber with the highest priority level first;
3. When a service subscriber with a lower priority level in a trunking group is talking on the uplink as a current talker, a service subscriber with a higher priority level can interrupt the current talker and pre-empt the uplink to talk.

The first two service features are easy to be achieved by setting different priority levels for different service subscribers in a trunking group, and a network of the trunking system (network for short) performing an appropriate process based on the priority levels of the service subscribers which send the uplink access requests. However, the third service feature is hard to be realized in the prior art.

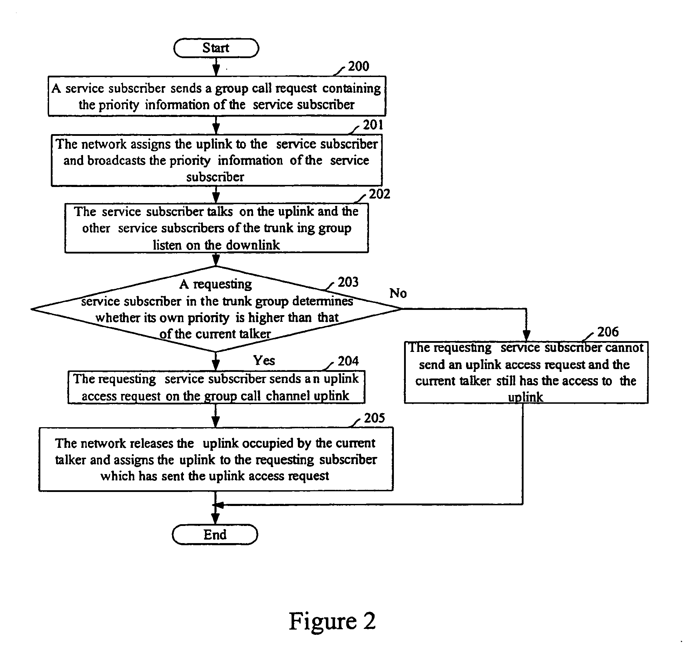

Figure 2 is a flowchart illustrating a method for a service subscriber with a higher priority level in a trunking group to pre-empt an uplink in the prior art. In this method, a priority level is defined for every service subscriber in the trunking group in advance and written into the Subscriber Identity Module (SIM) of the service subscriber together with the trunking group ID, and the network may define or modify priority levels of service subscribers through a radio interface. The method includes the following steps.

Step 200: a service subscriber presses a Push-to-Talk (PTT) button to send a voice group call request containing priority information of the service subscriber and the request is reported to the network.

Step 200 may be performed either when a group call is being established or when a group call has already been established, i.e., when the network has allocated a pair of uplink and downlink group call channels in the group call area of the trunking group to which the service subscriber belongs and has broadcast an UPLINK FREE message on the group call channels.

Step 201: upon receiving the group call request, the network will assign the uplink to the service subscriber after allocating a pair of group call channels in the group call area of the trunking group to which the service subscriber belongs if the request is sent during the establishment of the group call; or the network will assign the uplink directly to the service subscriber if the request is sent when the group call has been established.

After assigning the uplink to the service subscriber, the network will broadcast an UPLINK BUSY message containing priority information of the current talker on the group call channels.

Step 202: the service subscriber which has sent the voice group call request talks on the uplink, and the other service subscribers of the trunking group listen on the downlink.

Step 203: when another service subscriber (i.e., a requesting service subscriber) in the trunking group wishes to pre-empt the uplink while the uplink is in use, that is, to request for the uplink, it should first determine whether its own priority level is higher than that of the current talker, if its priority level is higher, Step 204 shall be performed; otherwise, Step 206 shall be performed.

Step 204: the requesting service subscriber sends an uplink access request to the network by a random access procedure on the uplink.

Step 205: upon receiving the uplink access request, the network releases the uplink occupied by the current talker, assign the uplink to the requesting service subscriber, and broadcast an UPLINK BUSY message, which contains the priority information of the requesting service subscriber, on the group call channels; then the service subscriber requesting for the uplink may talk on the uplink.

Step 206: the requesting service subscriber may not send an uplink access request to the network by a random access procedure on the uplink, and the current talker still has the access to the uplink.

It can be seen from the descriptions above that in the method shown in Figure 2, priority levels are defined for different service subscribers in a trunking group and a service subscriber with a higher priority level in the trunking group can pre-empt an uplink occupied by a service subscriber with a lower priority level. However, when the service subscriber with a higher priority level in the trunking group attempts to pre-empt the uplink, it has to send a request to the network on the uplink where the service subscriber with a lower priority level is talking currently, as is described in Step 204. As the network is processing the speech of the service subscriber with a lower priority level, i.e., processing the speech received on the uplink and sending the speech to other service subscribers on the downlink, the network cannot correctly receive and demodulate the uplink access request sent on the same uplink at the same time. Thus, no service subscriber in the trunking group, no matter with a higher or lower priority level, is able to pre-empt the uplink. Furthermore, it is impossible for the service subscriber with a higher priority level to pre-empt the uplink, either.

To solve the problem, the network should allocate a dedicated channel uplink to a service subscriber when the service subscriber sends an uplink access request and assign the dedicated channel uplink allocated instead of a group call channel uplink established to the service subscriber to talk. Therefore, when another requesting service subscriber attempts to pre-empt the uplink in use, it sends an uplink access request to the network on the group call channel uplink which is not occupied by the current talker, so that the network may receive the uplink access request on the group call channel uplink while receiving a speech on the dedicated channel uplink. The network then releases the dedicated channel uplink occupied by the current talker and allocates the dedicated channel uplink for the requesting service subscriber. The dedicated channel uplink allocated is then assigned to the requesting service subscriber to talk by the network. Hence the requesting service subscriber successfully pre-empts the uplink. Obviously, the requesting service subscriber has to ensure first whether its own priority level is higher than that of the current talker when it wants to pre-empt the group call channel uplink, and initiates the pre-emption process only when its priority level is higher; otherwise, it may not initiate the pre-emption process. In this way, the service subscriber with a higher priority level can pre-empt a group call channel uplink.

WO02/093953 A1 discloses a method and apparatus for reducing latency in a group communication network provides for a significant reduction in the actual total dormancy wakeup and the PTT latency by exchanging group call signaling even when mobiles are dormant and no traffic channel is active.

US 2002/010999 A1 discloses an apparatus to form a group of communication devices over a distributed network.

WO 97/48248 A2 discloses a method and apparatus in a push-to-talk dispatch system for providing an accelerated response to a push-to-talk origination message.

Nevertheless, the process above for a service subscriber in a trunking group, especially for a service subscriber with a higher priority level in a trunking group, to pre-empt a group call channel uplink has a disadvantage: upon receiving an uplink access request, the network allocates a dedicated channel uplink to the service subscriber sending the uplink access request, and then the dedicated channel uplink allocated instead of the group call channel uplink established is assigned to the service subscriber by the network, which increases the time lag before the speech of the service subscriber, especially the time lag before the speech of a service subscriber with a higher priority level.

### Summary of the Invention

In view of the above, the major objective of the present invention is to provide a method for assigning a dedicated channel uplink to a service subscriber in a trunking group. Through the method, a dedicated channel uplink is assigned to a service subscriber to talk without increasing the time lag. Furthermore, through the method, a dedicated channel uplink can be assigned to a service subscriber with a higher priority level to talk without increasing the time lag.

A method for assigning a dedicated channel uplink to a service subscriber in a trunking group includes:
allocating, by a network, a group call channel uplink to the trunking group when the trunking group call is established;
assigning the group call channel uplink to the service subscriber upon receiving an uplink access request sent by the service subscriber when the service subscriber attempts to pre-empt the group call channel uplink;
establishing a dedicated channel uplink to be allocated to the service subscriber; and
assigning the dedicated channel uplink to the service subscriber currently talking on the group call channel uplink after the dedicated channel uplink is established
defining a plurality of priority levels for service subscribers of the trunking group; and
before the network receives the uplink access request sent by the service subscriber when the service subscriber attempts to pre-empt the group call channel uplink,
allocating, by the network, a dedicated channel uplink to a current talker and sending an UPLINK BUSY message and priority information of the current talker.

The method further includes:
determining, by the service subscriber, whether a priority level of the service subscriber is higher than a priority level of the current talker according to the priority information of the current talker upon receiving the UPLINK BUSY message;
if the priority level of the service subscriber is higher, sending, by the service subscriber, an uplink access request to the network and receiving, by the network, the uplink access request;
otherwise, not starting the process of pre-empting the group call channel uplink.

The method further includes:
before assigning the group call channel to the service subscriber,
releasing, by the network, the dedicated channel uplink allocated to the current talker.

The method further includes:
before releasing the dedicated channel uplink allocated to the current talker,
determining, by the network, whether the priority level of the service subscriber is higher than the priority level of the current talker according to the priority information of the service subscriber contained in the uplink access request upon receiving the uplink access request;
if the priority level of the service subscriber is higher, releasing the dedicated channel uplink allocated to the current talker.

The UPLINK BUSY message is sent in a downlink message by the network and the priority information of the current talker is also sent in a downlink message by the network.

The downlink message carrying the UPLINK BUSY message and the downlink message carrying the priority information of the current talker are the same one.

The downlink message is sent on a Notification Channel.

The method further includes:
before determining whether the priority level of the service subscriber is higher than the priority level of the current talker according to the priority information of the current talker,
determining, by the service subscriber, whether the priority level of the service subscriber is the lowest in the trunking group;
if the priority level of the service subscriber is the lowest, prohibiting the process of pre-empting the group call channel uplink;
otherwise, determining, by the service subscriber, whether the priority level of the service subscriber is higher than the priority level of the current talker occupying the group call channel uplink.

A system for assigning a dedicated channel uplink to a service subscriber of a trunking group comprising: a apparatus configured to implement the method according to any one of claims 1 to 8.

It can be seen from the above scheme that, in the method provided by the present invention, the network first, upon receiving an uplink access request sent by a service subscriber, assigns a voice group call channel uplink to the service subscriber to talk, then establishes a dedicated channel uplink for the service subscriber; and once the dedicated channel uplink is established, the network assigns the dedicated channel uplink to the service subscriber currently talking on the group call channel uplink. In this way, a service subscriber does not need to wait for the establishment and allocation of a dedicated channel uplink by the network, and an established group call channel uplink is directly assigned to the service subscriber to talk; once a dedicated channel uplink is established and allocated by the network, the allocated dedicated channel uplink is then assigned to the service subscriber to talk. Therefore, the dedicated channel uplink may be assigned to a service subscriber to talk without increasing time lag. Furthermore, through the method, the dedicated channel uplink can be assigned to a service subscriber with a higher priority level to talk without increasing the time lag.

### Brief Description of the Drawings

Figure 1 is a schematic diagram illustrating a group call procedure in the prior art.
Figure 2 is a flowchart illustrating a method for a service subscriber with a higher priority level in a trunking group to pre-empt a group call channel uplink in the prior art.
Figure 3 is a flowchart of assigning a dedicated channel uplink to a service subscriber with a higher priority level which attempts to pre-empt a group call channel uplink by the network in accordance with an embodiment of the present invention.
Figure 4 is a flowchart of assigning the dedicated channel uplink to the service subscriber currently talking on a group call channel uplink over again in accordance with an embodiment of the present invention.

### Detailed Description of the Invention

Embodiments of the invention are further described in detail with reference to accompanying drawings.

When a service subscriber is accessing an uplink or pre-empting an uplink, in order to assign an uplink to the service subscriber for talking without increasing the time lag, an embodiment of the present invention provides a method in which the network first assigns, upon receiving the uplink access request sent by a service subscriber, a group call channel uplink allocated when the group call was established to the service subscriber to talk; and establishes a dedicated channel uplink to be allocated to the service subscriber; then assigns the dedicated channel uplink to the service subscriber currently talking on the group call channel uplink after the dedicated channel uplink is established. Thus, the service subscriber may talk on the dedicated channel uplink assigned to it.

In this way, upon sending an uplink access request, a service subscriber does not need to wait for a dedicated channel uplink established and allocated by the network, since a group call channel uplink established is directly assigned to the service subscriber. After the dedicated channel uplink is established and allocated, the dedicated channel uplink is then assigned to the service subscriber to talk. The group call channel uplink established is thus free to collect other uplink access requests sent by other service subscribers of the trunking group when they attempt to pre-empt the uplink. Therefore, without increasing time lag, the dedicated channel uplink may be assigned to the service subscriber to talk and follow-up processes of pre-empting the uplink may be performed.

Furthermore, when there is a current talker talking in the trunking group, other service subscribers should determine whether their own priority levels are higher than that of the current talker before they attempt to pre-empt the uplink. The other service subscribers proceed to the pre-emption process only when their priority levels are higher; otherwise, they may not initiate the procedure of pre-empting the uplink. When a service subscriber with a higher priority level attempts to pre-empt the uplink, it should send an uplink access request to the network. Upon receiving the uplink access request, the network will first release a dedicated channel uplink occupied by a current talker and assign the group call channel uplink which was allocated when the group call was established to the service subscriber with a higher priority level to talk. Then the network establishes a dedicated channel uplink to be allocated for the service subscriber and assigns the dedicated channel uplink to the service subscriber currently talking on the group call channel uplink once the dedicated channel uplink is established. Hence the service subscriber may talk on the dedicated channel uplink assigned to it.

The other service subscribers should also determine whether their own priority levels are the lowest in the trunking group before they determine whether their own priority levels are higher than that of the current talker. If yes, they shall not attempt to pre-empt the uplink; otherwise, they proceed to determine whether their priority levels are higher than that of the current talker.

The dedicated channel uplink occupied by the current talker and then released by the network may either be the same as or be different from the one assigned to the service subscriber who sends an uplink access request.

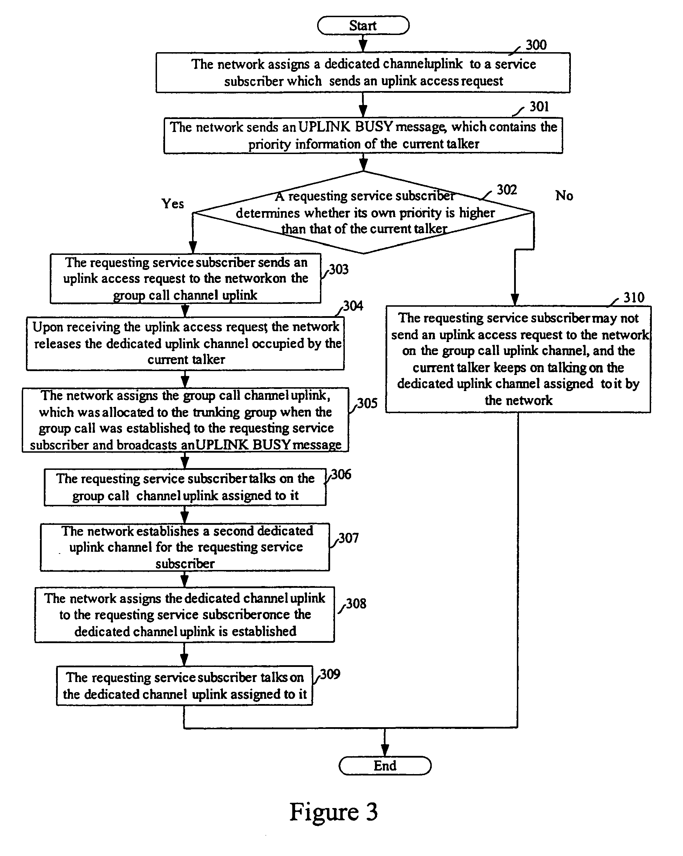

Figure 3 is a flowchart of an embodiment of the present invention in which a group call channel uplink is assigned to a service subscriber in a trunking group. The embodiment provides a method through which the network assigns a dedicated channel uplink to a service subscriber with a higher priority level which initiates a procedure of pre-empting a group call channel uplink. In the embodiment, a group call has already been established for the trunking group and the network has allocated a pair of group call channels to the trunking group. The method includes the following steps.

Step 300: the network assigns a dedicated channel uplink to a service subscriber which sends an uplink access request to talk as a current talker.

Step 301: the network sends, on the group call channels, an UPLINK BUSY message, which contains priority information of the current talker.

The UPLINK BUSY message and the priority information of the current talker may be sent in different downlink messages or in one downlink message in the embodiments of the present invention.

Step 302: when another service subscriber, i.e. a requesting service subscriber, in the trunking group wishes to pre-empt the uplink when the uplink is in use, it determines whether its own priority level is higher than that of the current talker; if yes, Step 303 shall be performed; otherwise, Step 310 shall be performed.

Step 303: the requesting service subscriber sends an uplink access request to the network on the group call channel uplink.

Step 304: upon receiving the uplink access request, the network releases the dedicated channel uplink occupied by the current talker.

Before releasing the dedicated channel uplink occupied by the current talker, the network should determine whether the priority level of the requesting service subscriber which sends the uplink access request is higher than that of the current talker; if yes, the network releases the dedicated channel uplink occupied by the current talker; otherwise, the network does not respond to the uplink access request, or sends an access failure message to the requesting service subscriber which sends the uplink access request, and the process is terminated.

The uplink access request sent in Step 303 should contain the priority information of the requesting service subscriber so that the network may perform the determining process above; however, the determining process performed by the network is not shown in Figure 3.

Step 305: the network assigns the group call channel uplink which was allocated to the trunking group when the group call was established to the requesting service subscriber and broadcasts an UPLINK BUSY message, which contains the priority information of the requesting service subscriber, on the group call channels; therefore, a service subscriber with a higher priority level in the trunking group may initiate the procedure of pre-empting the group call channel uplink.

The UPLINK BUSY message and the priority information of the requesting service subscriber can be sent in different downlink messages or in one downlink message in the present invention.

Step 306: the requesting service subscriber talks on the group call channel uplink assigned to it.

Step 307: the network establishes a second dedicated channel uplink to be allocated to the requesting service subscriber.

Step 308: the network assigns the second dedicated channel uplink to the requesting service subscriber after the second dedicated channel uplink to be allocated to the requesting service subscriber is established.

Step 309: the requesting service subscriber starts talking on the second dedicated channel uplink assigned to it.

Step 310: the requesting service subscriber may not send an uplink access request to the network on the group call channel uplink, and the current talker still has the access to the dedicated channel uplink allocated to it by the network.

In Step 300, a dedicated channel uplink may be directly assigned to a service subscriber which sends an uplink access request to talk as a current talker, i.e., the network first establishes a dedicated channel uplink and then assigns the dedicated channel uplink established to the service subscriber to talk; or, a dedicated channel uplink may also be assigned according to the method provided by the embodiment of the present invention, i.e., the network assigns the group call channel uplink which was allocated to the trunking group when the group call was established to the service subscriber, meanwhile establishes a dedicated channel uplink to be allocated to the service subscriber; and, when the dedicated channel uplink is established, the dedicated channel uplink is assigned to the service subscriber currently talking on the group call channel uplink so that the service subscriber may talk on the dedicated channel uplink assigned to it.

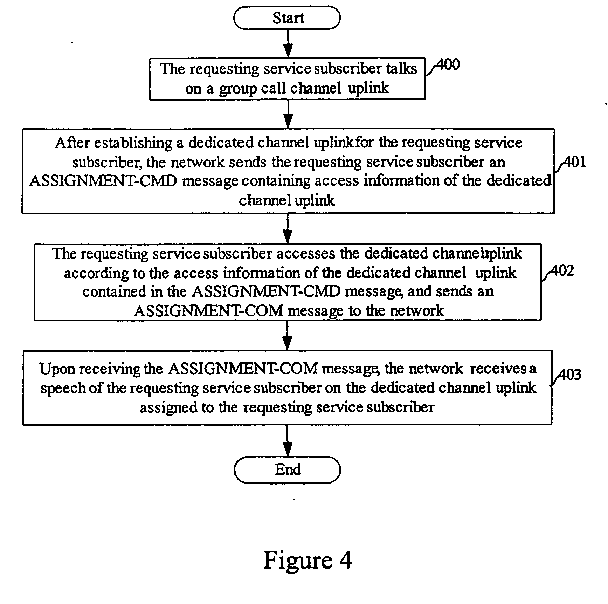

Figure 4 is a flowchart illustrating a procedure in which the second dedicated channel uplink is assigned to the service subscriber talking on the group call channel uplink after the second dedicated channel uplink to be allocated to the service subscriber has been established by the network, including the flowing steps.

Step 400: the requesting service subscriber talks on a group call channel uplink.

Step 401: upon establishing the second dedicated channel uplink to be allocated to the requesting service subscriber, the network sends the requesting service subscriber a dedicated channel assignment command (ASSIGNMENT-CMD) message containing access information of the second dedicated channel uplink.

Step 402: upon receiving the ASSIGNMENT-CMD message, the requesting service subscriber accesses the second dedicated channel uplink according to the access information of the second dedicated channel uplink contained in the message, and sends a dedicated channel assignment completion (ASSIGNMENT-COM) message to the network.

Step 403: upon receiving the ASSIGNMENT-COM message, the network receives a speech of the requesting service subscriber on the second dedicated channel uplink assigned to the requesting service subscriber.

As the assignment procedure of a dedicated channel uplink has already been standardized, the procedure shown in Figure 4 adopts the standard assignment procedure of the dedicated channel uplink.

When all the service subscribers in a trunking group are in areas managed by one base station, the network refers to the base station; when all the service subscribers in a trunking group are in areas managed by different base stations, the network refers to all the base stations related and the anchor MSC that manages all the base stations.

When the network refers to all the base stations related that manage the service subscribers of the trunking group and the anchor MSC that manages all the base stations, Step 401 further includes: sending, by the anchor MSC in the network, an assignment request (ASS-REQ) message to the base station that manages the service subscriber after the network has established the second dedicated channel uplink to be allocated to the service subscriber; and sending, by the base station upon receiving the ASS-REQ message, an ASSIGNMENT-CMD message containing the access information of the second dedicated channel uplink, to the service subscriber. And Step 402 further includes: accessing, by the service subscriber which has received the ASSIGNMENT-CMD message, the second dedicated channel uplink according to the access information of the second dedicated channel uplink contained in the message; sending, by the service subscriber, an ASSIGNMENT-COM message to the base station that manages the service subscriber; and sending, by the base station upon receiving the ASSIGNMENT-COM message, a dedicated channel establishment completion (ASS-COM) message to the anchor MSC in the network.

In the embodiments of the present invention, a service subscriber may be a user terminal or other devices that support trunking communications.

The method provided by the embodiments sharply reduces the interval between the moment when a service subscriber pushes a PTT button to send an uplink access request to the network and the moment when the service subscriber may start talking, thus reducing the time lag before the speech of the service subscriber.

## Claims

1. A method for assigning a dedicated channel uplink to a service subscriber of a trunking group, comprising:
allocating, by a network, a group call channel uplink to the trunking group when a trunking group call is established;
assigning (305) the group call channel uplink to the service subscriber upon receiving an uplink access request sent by the service subscriber when the service subscriber attempts to pre-empt the group call channel uplink;
establishing (307) a dedicated channel uplink to be allocated to the service subscriber; and
assigning (308) the dedicated channel uplink to the service subscriber currently talking on the group call channel uplink after the dedicated channel uplink is established,
**characterized in that** :
defining, by the network, a plurality of priority levels for service subscribers of the trunking group; and
before the network receives the uplink access request sent by the service subscriber when the service subscriber attempts to pre-empt the group call channel uplink,
allocating (305), by the network, a dedicated channel uplink to a current talker and sending an UPLINK BUSY message and priority information of the current talker.

2. A method according to Claim 1, further comprising:
determining, by the service subscriber, whether a priority level of the service subscriber is higher than a priority level of the current talker according to the priority information of the current talker upon receiving the UPLINK BUSY message;
if the priority level of the service subscriber is higher, sending, by the service subscriber, an uplink access request to the network and receiving, by the network, the uplink access request;
otherwise, not starting the process of pre-empting the group call channel uplink.

3. A method according to Claim 2, further comprising:
before assigning the group call channel to the service subscriber, releasing(304), by the network, the dedicated channel uplink allocated to the current talker.

4. A method according to Claim 3, further comprising:
before releasing the dedicated channel uplink allocated to the current talker,
determining (304), by the network, whether the priority level of the service subscriber is higher than the priority level of the current talker according to the priority information of the service subscriber contained in the uplink access request upon receiving the uplink access request;
if the priority level of the service subscriber is higher, releasing the dedicated channel uplink allocated to the current talker.

5. A method according to Claim2, wherein the UPLINK BUSY message is sent in a downlink message by the network and the priority information of the current talker is also sent in a downlink message by the network.

6. A method according to Claim 5, wherein the downlink message carrying the UPLINK BUSY message and the downlink message carrying the priority information of the current talker are the same one.

7. A method according to Claim 5 or Claim6, wherein the downlink message is sent on a Notification Channel.

8. A method according to Claim 2, further comprising:
before determining whether the priority level of the service subscriber is higher than the priority level of the current talker according to the priority information of the current talker,
determining, by the service subscriber, whether the priority level of the service subscriber is the lowest in the trunking group;
if the priority level of the service subscriber is the lowest, prohibiting the process of pre-empting the group call channel uplink;
otherwise, determining, by the service subscriber, whether the priority level of the service subscriber is higher than the priority level of the current talker occupying the group call channel uplink.

9. A system for assigning a dedicated channel uplink to a service subscriber of a trunking group **characterized in that** the system comprising: an apparatus configured to implement the method according to one of the claims 1 to 8.

## Patentansprüche

1. Verfahren zum Zuweisen einer dedizierten Kanalaufwärtsstrecke zu einem Dienstteilnehmer einer Bündelfunkgruppe, das Folgendes umfasst:
Zuteilen, durch ein Netz, einer Gruppenrufkanal-Aufwärtsstrecke zu der Bündelfunkgruppe, wenn ein Bündelfunkgruppenanruf hergestellt wird;
Zuweisen (305) der Gruppenrufkanal-Aufwärtsstrecke zu dem Dienstteilnehmer beim Empfangen einer durch den Dienstteilnehmer gesendeten Aufwärtsstreckenzugriffsanforderung, wenn der Dienstteilnehmer versucht, die Gruppenrufkanal-Aufwärtsstrecke vorher zu belegen;
Herstellen (307) einer Aufwärtsstrecke eines dedizierten Kanals, die dem Dienstteilnehmer zuzuteilen ist; und
Zuweisen (308) der Aufwärtsstrecke eines dedizierten Kanals zu dem Dienstteilnehmer, der momentan in der Gruppenrufkanal-Aufwärtsstrecke spricht, nachdem die Aufwärtsstrecke eines dedizierten Kanals hergestellt worden ist,
**gekennzeichnet durch**:
Definieren, **durch** das Netz, mehrerer Prioritätsebenen für Dienstteilnehmer der Bündelfunkgruppe; und
bevor das Netz die **durch** den Dienstteilnehmer gesendete Aufwärtsstreckenzugriffsanforderung empfängt, wenn der Dienstteilnehmer versucht, die Gruppenrufkanal-Aufwärtsstrecke vorher zu belegen,
Zuteilen (305), **durch** das Netz, einer Aufwärtsstrecke eines dedizierten Kanals zu einem momentanen Sprecher und Senden einer UPLINK BUSY-Nachricht und von Prioritätsinformationen des momentanen Sprechers.

2. Verfahren nach Anspruch 1, das ferner Folgendes umfasst:
Bestimmen, durch den Dienstteilnehmer, in Übereinstimmung mit den Prioritätsinformationen des momentanen Sprechers beim Empfangen der UPLINK BUSY-Nachricht, ob eine Prioritätsebene des Dienstteilnehmers höher als eine Prioritätsebene des momentanen Sprechers ist;
falls die Prioritätsebene des Dienstteilnehmers höher ist, Senden, durch den Dienstteilnehmer, einer Aufwärtsstreckenzugriffsanforderung an das Netz und Empfangen, durch das Netz, der Aufwärtsstreckenzugriffsanforderung;
andernfalls nicht Beginnen des Prozesses, die Gruppenrufkanal-Aufwärtsstrecke vorher zu belegen.

3. Verfahren nach Anspruch 2, das ferner Folgendes umfasst:
vor dem Zuweisen des Gruppenrufkanals zu dem Dienstteilnehmer,
Freigeben (304), durch das Netz, der Aufwärtsstrecke eines dedizierten Kanals, die dem momentanen Sprecher zugeteilt ist.

4. Verfahren nach Anspruch 3, das ferner Folgendes umfasst:
vor dem Freigeben der Aufwärtsstrecke eines dedizierten Kanals, die dem momentanen Sprecher zugeteilt ist,
Bestimmen (304), durch das Netz, in Übereinstimmung mit den Prioritätsinformationen des Dienstteilnehmers, die in der Aufwärtsstreckenzugriffsanforderung enthalten sind, beim Empfangen der Aufwärtsstreckenzugriffsanforderung, ob die Prioritätsebene des Dienstteilnehmers höher als die Prioritätsebene des momentanen Sprechers ist;
falls die Prioritätsebene des Dienstteilnehmers höher ist, Freigeben der Aufwärtsstrecke eines dedizierten Kanals, die dem momentanen Sprecher zugeteilt ist.

5. Verfahren nach Anspruch 2, wobei die UPLINK BUSY-Nachricht durch das Netz in einer Abwärtsstreckennachricht gesendet wird und die Prioritätsinformationen des momentanen Sprechers außerdem durch das Netz in einer Abwärtsstreckennachricht gesendet werden.

6. Verfahren nach Anspruch 5, wobei die Abwärtsstreckennachricht, die die UPLINK BUSY-Nachricht trägt, und die Abwärtsstreckennachricht, die die Prioritätsinformationen des momentanen Sprechers trägt, dieselbe sind.

7. Verfahren nach Anspruch 5 oder Anspruch 6, wobei die Abwärtsstreckennachricht in einem Benachrichtigungskanal gesendet wird.

8. Verfahren nach Anspruch 2, das ferner Folgendes umfasst:
vor dem Bestimmen in Übereinstimmung mit den Prioritätsinformationen des momentanen Sprechers, ob die Prioritätsebene des Dienstteilnehmers höher als die Prioritätsebene des momentanen Sprechers ist,
Bestimmen, durch den Dienstteilnehmer, ob die Prioritätsebene des Dienstteilnehmers die niedrigste in der Bündelfunkgruppe ist;
falls die Prioritätsebene des Dienstteilnehmers die niedrigste ist, Verbieten des Prozesses, die Gruppenrufkanal-Aufwärtsstrecke vorher zu belegen;
andernfalls Bestimmen, durch den Dienstteilnehmer, ob die Prioritätsebene des Dienstteilnehmers höher als die Prioritätsebene des momentanen Sprechers ist, der die Gruppenrufkanal-Aufwärtsstrecke belegt.

9. System zum Zuweisen einer Aufwärtsstrecke eines dedizierten Kanals zu einem Dienstteilnehmer einer Bündelfunkgruppe, **dadurch gekennzeichnet, dass** das System Folgendes umfasst: eine Vorrichtung, die konfiguriert ist, das Verfahren nach einem der Ansprüche 1 bis 8 zu implementieren.

## Revendications

1. Procédé d'attribution d'une liaison montante de canal dédiée à un abonné à un service d'un groupe de mise en commun, comprenant :
l'attribution, par un réseau, d'une liaison montante de canal d'appel de groupe au groupe de mise en commun quand un appel de groupe de mise en commun est établi ;
l'attribution (305) de la liaison montante de canal d'appel de groupe à l'abonné au service à la réception d'une requête d'accès à la liaison montante envoyée par l'abonné au service quand l'abonné au service essaye de préempter la liaison montante de canal d'appel de groupe ;
l'établissement (307) d'une liaison montante de canal dédiée à attribuer à l'abonné au service ; et
l'attribution (308) de la liaison montante de canal dédiée à l'abonné au service en cours de conversation sur la liaison montante de canal d'appel de groupe après l'établissement de la liaison montante de canal dédiée,
**caractérisé par** :
la définition, par le réseau, d'une pluralité de niveaux de priorité pour les abonnés au service du groupe de mise en commun ; et
avant que le réseau reçoive la requête d'accès à la liaison montante envoyée par l'abonné au service quand l'abonné au service essaye de préempter la liaison montante de canal d'appel de groupe,
l'attribution (305), par le réseau, d'une liaison montante de canal dédiée à un locuteur actuel et l'envoi d'un message UPLINK BUSY (liaison montante occupée) et d'informations de priorité du locuteur actuel.

2. Procédé selon la revendication 1, comprenant en outre :
la détermination, par l'abonné au service, qu'un niveau de priorité de l'abonné au service est supérieur ou non à un niveau de priorité du locuteur actuel en fonction des informations de priorité du locuteur actuel à la réception du message UPLINK BUSY ;
si le niveau de priorité de l'abonné au service est supérieur, l'envoi, par l'abonné au service, d'une requête d'accès à la liaison montante au réseau, et la réception, par le réseau, de la requête d'accès à la liaison montante ;
si le niveau de priorité de l'abonné au service n'est pas supérieur, le non-lancement du processus de préemption de la liaison montante de canal d'appel de groupe.

3. Procédé selon la revendication 2, comprenant en outre :
avant l'attribution du canal d'appel de groupe à l'abonné au service,
la libération (304), par le réseau, de la liaison montante de canal dédiée attribuée au locuteur actuel.

4. Procédé selon la revendication 3, comprenant en outre :
avant la libération de la liaison montante de canal dédiée attribuée au locuteur actuel,
la détermination (304), par le réseau, que le niveau de priorité de l'abonné au service est supérieur ou non au niveau de priorité du locuteur actuel en fonction des informations de priorité de l'abonné au service contenues dans la requête d'accès à la liaison montante à la réception de la requête d'accès à la liaison montante ;
si le niveau de priorité de l'abonné au service est supérieur, la libération de la liaison montante de canal dédiée attribuée au locuteur actuel.

5. Procédé selon la revendication 2, dans lequel le message UPLINK BUSY est envoyé dans un message de liaison descendante par le réseau et les informations de priorité du locuteur actuel sont aussi envoyées dans un message de liaison descendante par le réseau.

6. Procédé selon la revendication 5, dans lequel le message de liaison descendante portant le message UPLINK BUSY et le message de liaison descendante portant les informations de priorité du locuteur actuel sont les mêmes.

7. Procédé selon la revendication 5 ou la revendication 6, dans lequel le message de liaison descendante est envoyé sur un Canal de Notification.

8. Procédé selon la revendication 2, comprenant en outre :
avant la détermination que le niveau de priorité de l'abonné au service est supérieur ou non au niveau de priorité du locuteur actuel en fonction des informations de priorité du locuteur actuel,
la détermination, par l'abonné au service, que le niveau de priorité de l'abonné au service est le plus bas ou non dans le groupe de mise en commun ;
si le niveau de priorité de l'abonné au service est le plus bas, l'interdiction du processus de préemption de la liaison montante de canal d'appel de groupe ;
si le niveau de priorité de l'abonné au service n'est pas le plus bas, la détermination, par l'abonné au service, que le niveau de priorité de l'abonné au service est supérieur ou non au niveau de priorité du locuteur actuel occupant la liaison montante d'appel de groupe.

9. Système d'attribution d'une liaison montante de canal dédiée à un abonné à un service d'un groupe de mise en commun, **caractérisé en ce que** le système comprend : un appareil configuré pour mettre en oeuvre le procédé selon l'une des revendications 1 à 8.
